(19) Europäisches Patentamt
European Patent Office
Office européen des brevets

(11) Publication number: 0 159 848
B1

(12) EUROPEAN PATENT SPECIFICATION

(45) Date of publication of patent specification: 17.10.90

(51) Int. Cl.$^5$: C 07 C 2/08 // B01J29/28

(21) Application number: 85302428.9

(22) Date of filing: 04.04.85

# (54) Production of lubricant range hydrocarbons from light olefins.

(30) Priority: 09.04.84 US 598139

(43) Date of publication of application:
30.10.85 Bulletin 85/44

(45) Publication of the grant of the patent:
17.10.90 Bulletin 90/42

(84) Designated Contracting States:
BE DE FR GB IT NL

(56) References cited:
EP-A-0 099 701
DE-A-2 347 235
DE-A-3 229 895
US-A-4 100 215
US-A-4 414 423

CHEMICAL ABSTRACTS, vol. 99, no. 17, Oct 24, 1983, Columbus, Ohio, USA; W.E. GARWOOD "Conversion of C2-C10 to higher olefins over synthetic zeolite ZSM-5 "page 543 ,abstract-no .139251v

(73) Proprietor: MOBIL OIL CORPORATION
150 East 42nd Street
New York New York 10017 (US)

(72) Inventor: Chen, Catherine Shuihua Hsia
102 Pine Grove Road
Berkely Heights New Jersey 07922 (US)

(74) Representative: Colmer, Stephen Gary
Patent Department c/o Mobil Services Company
Limited Mobil Court 3 Clements Inn
London WC2A 2EB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 159 848 B1

Courier Press, Leamington Spa, England.

## Description

This invention relates to the manufacture of high viscosity index lubricant range hydrocarbons. In particular, it provides a multi-stage process in which an oligomerization catalyst, such as shape selective medium pore crystalline zeolite of the ZSM—5 type, is employed for upgrading olefinic feedstocks containing $C_3^+$ alkenes at elevated temperature and pressure.

Recent work in the field of olefin upgrading has resulted in a catalytic process for converting lower olefins to heavier hydrocarbons. Heavy distillate and lubricant range hydrocarbons can be synthesized over ZSM—5 type catalysts at elevated temperature and pressure to provide a product having substantially lineaar molecular conformations due to the ellipsoidal shape selectivity of certain medium pore catalysts.

Conversion of olefins to gasoline and/or distillate products is disclosed in U.S. Patents 3,960,978 and 4,021,502 wherein gaseous olefins in the range of ethylene to pentene, either alone or in admixture with paraffins are converted into an olefinic gasoline blending stock by contacting the olefins with a catalyst bed made up of a ZSM-5 type zeolite. Particular interest has been shown in a technique described in European Patent Application 83301391.5, published 29 Sept. 1983. In U.S. Patents 4,150,062, 4,211,640 and 4,227,992, there are described the operating conditions for the Mobil Olefin to Gasoline/Distillate (MOGD) process for selective conversion of $C_3^+$ olefins to mainly aliphatic hydrocarbons.

In the process for catalytic conversion of olefins to heavier hydrocarbons by catalytic oligomerization usign a medium pore shape selective acid crystalline zeolite, such as ZSM—5 type catalyst, process conditions can be varied to favor the formation of hydrocarbons of varying molecular weight. At moderate temperature and relatively high pressure, the conversion conditions favor $C_{10}+$ aliphatic product. Lower olefinic feedstocks containing $C_2$—$C_8$ alkenes may be converted; however, the distillate mode conditions do not convert a major fraction of ethylene. A typical reactive feedstock consists essentially of $C_3$—$C_6$ mono-olefins, with varying amounts of nonreactive paraffins and the like being acceptable components.

U.S.—A—4 414 423 discloses a process for preparing high boiling hydrocarbons from olefins comprising contacting a normally gaseous olefin feed with a first catalyst comprising an intermediate pore size molecular sieve to form normally liquid olefines and contacting the liquid olefins with a second catalyst to form oligomers thereof. The deactivation of the zeolite surface using bulky basic compounds is not disclosed.

DE—A—2 347 235 discloses a process for dimerization of linear olefins using a catalyst having deposited thereon a Group VIII metal such as nickel. The pore size for the catalyst is about 10°A.

The present invention seeks to provide an improved process for upgrading olefins to valuable lubricant quality product. Significantly improved linearity can be achieved by employing a primary stage catalyst comprising a medium pore shape selective siliceous zeolite with a substantially inactive surface.

A two-stage process has not been devised for converting a feedstock comprising lower olefins to form higher hydrocarbons, particularly lubricants. In a preferred aspect, a two-stage process is provided for producing hydrocarbons by oligomerising lower olefin feed at moderate temperature and elevated pressure which comprises contacting the lower olefin in a primary reactor stage under oligomerisation conditions with a medium pore siliceous zeolite catalyst having acid cracking activity, and a constraint index of about 1 to 12; wherein the zeolite has acidic pore activity and wherein the zeolite surface is substantially inactive for acidic reactions. After separating the primary stage effluent to obtain a heavy fraction rich in substantially linear $C_{10}+$ intermediate olefins, the process is completed by contacting the heavy fraction in a secondary reactor stage with an acidic catalyst to upgrade the heavy fraction to a high viscosity index lubricant range hydrocarbon. This technique is advantageous for producing $C_{20}+$ heavy hydrocarbons comprising lubricant or heavy distillate range compounds having a substantially linear molecular conformation from lower olefins, such as $C_3$ to $C_6$ mono-olefins.

In addition a continuous method for operating the primary stage has been devised wherein the catalyst surface is modified by chemisorption by cofeeding a surface — modifying agent with the olefinic feedstock. Sterically-hindered basic compounds are particularly useful for injection deactivation of surface acid sites.

The drawing is a schematic representation of a fixed bed reactor system and product separation system, according to the invention, showing process flow streams and unit operations.

The shape-selective oligomerization/polymerization catalysts preferred for use herein include the crystalline aluminosilicate zeolites having a silica to alumina molar ratio of at least 12, a constraint index of about 1 to 12 and acid cracking activity of about 50—300. Representative of the ZSM—5 type zeolites are ZSM—5, ZSM—11, ZSM—12, ZSM—23, ZSM—35 and ZSM—38. ZSM—5 is described in U.S. Patent 3,702,886 and U.S. Patent Re. 29,948; ZSM—11 is described in U.S. Patent 3,709,979. U.S. Patent 3,832,449 describes ZSM—12; U.S. Patent 4,076,842 describes ZSM—23; U.S. Patent 4,016,245 describes ZSM—35 and U.S. Patent 4,046,839 describes ZSM—38. A suitable shape selective medium pore catalyst for fixed bed operations is a small crystal H—ZSM—5 zeolite (silica:alumina ratio approximately 70:1) with alumina binder in the form of cylindrical extrudates of about 1—5 mm. The catalyst preferably comprises ZSM—5 which has a crystallite size of 0.02 to 0.05 micron. Other pentasil catalysts which may be used in one or more reactor stages include a variety of medium pore (~ 5 to 9Å) siliceous materials such as borosilicates, ferrosilicates, and/or aluminosilicates disclosed in U.S. Patents 4,414,423 and 4,417,088.

The acid catalysts may be deactivated by pretreatment with a surface-neutralizing base, to obtain catalysts suitable for the primary stage of the process.

Secondary stage catalyst may comprise acid zeolites; however, other acid materials may be employed which catalyze ethylenic unsaturation reactions. Other desirable materials for the secondary reaction include HZSM—12, as described in U.S. Patent 4,254,295 or the large-pore zeolites of U.S. Patent 4,430,516.

Advantage may be obtained by selecting the same type of catalyst for both stages. Since the final stage is usually conducted at lower temperature than the initial reaction, higher activity may be maintained in the secondary reactor. However, the second stage catalyst can be any acid catalyst useful for polymerizing olefins. Particularly suitable are unmodified medium pore ZSM—5 type zeolites with a Constraint Index of 1—12, preferably of small crystal size (less than 1 micron). Also suitable are small pore zeolites, for example ZSM—34; large pore zeolites, for example mordenite and ZSM—4; synthetic faujasite, crystalline silica-aluminophosphates; amorphous silica-alumina; acid clays; organic cation exchange resin, such as cross linked sulfonated polystrene; and Lewis acids, such as $BF_3$ or $AlCl_3$ containing suitable co-catalysts such as water, alcohols, carboxylic acids; or hydrogen halides.

Shape-selective oligomerization, as it applies to the conversion of $C_2$—$C_{10}$ olefins over ZSM—5, is known to produce higher olefins up to $C_{30}$ and higher. As reported by Garwood in Intrazeolite Chemistry 23, (Amer. Chem. Soc., 1983), reaction conditions favoring higher molecular weight product are low temperature (200—260°C), elevated pressure (about 2000 kPa or greater) and long contact time (less than 1 WHSV). The reaction under these conditions proceeds through the acid-catalyzed steps of (1) oligomerization, (2) isomerization-cracking to a mixture of intermediate carbon number olefins, and (3) interpolymerization to give a continuous boiling product containing all carbon numbers. The channel systems of ZSM—5 type catalysts impose shape-selective contraints on the configuration of the large molecules, accounting for the differences with other catalysts.

The following model reaction path for propylene is set forth for purposes of explanation, and it should be taken as a theoretical path, as the process is presently understood by workers in the field.

$C_3$ = (propylene) oligomerization ⟶ $C_6$=, $C_9$=, $C_{12}$=, etc. ($C_3$ oligomers);

<u>Isomerization and cracking</u> ⟶ $C_3$=, $C_4$=, $C_5$=, $C_6$=, $C_7$=, etc.

<u>Interpolymerization</u> ⟶ 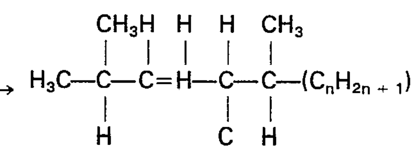

(representative structure).

The desired oligomerization-polymerization products include $C_{10}^+$ substantially linear aliphatic hydrocarbons. The ZSM—5 catalytic path for propylene feed provides a long chain with approximately one lower alkyl (e.g., methyl) subsituent per 8 or more carbon atoms in the straight chain.

The lubricant range final product can be depicted as a typical linear molecule having a sparingly-substituted long carbon chain, as follows:

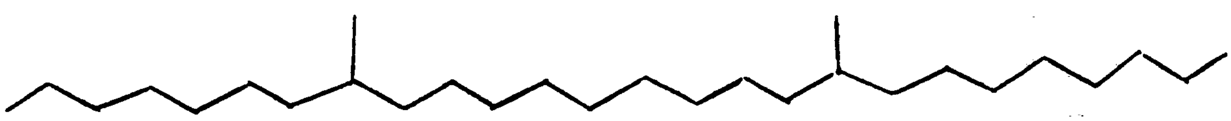

The final molecular conformation is influenced by the pore structure of the catalyst. For the higher carbon numbers, the structure is primarily a methyl-branched staight olefinic chain, with the maximum cross section of the chain limited by the 5.4 × 5.6 Angstrom dimension of the largest ZSM—5 pore. Although emphasis is placed on the normal 1-alkenes as feed stocks, other lower olefins such as 2-butene or isobutylene, are readily employed as starting material due to rapid isomerization over the acidic zeolite catalyst. At conditions chosen to maximize heavy distillate and lubricant range products ($C_{20}^+$) the raw aliphatic product is essentially mono-olefinic. Overall branching is not extensive, with most branches being methyl at about one branch per eight or more atoms.

The viscosity index of a hydrocarbon lube oil is related to its molecular conformation. Extensive branching in a molecule usually results in a low viscosity index. It is beleived that two modes of oligomerization/polymerization of olefins can take place over acidic zeolites such as HZSM—5. One reaction sequence takes place at Brönsted acids sites inside the channels or pores, producing essentially linear materials. The other reaction sequence occurs on the outer surface, producing highly branched material. By decreasing the surface acid activity (surface α-value) of such zeolites, fewer highly branched products with low VI are obtained.

Several techniques may be used to increases the relative ratio of intra-crystalline acid sites to surface active sites. This ratio increase with crystal size due to geometric relationship between volume and superficial surface area. Deposition of carbonaceous materials by coke formation can also shift the effective

ratio. However, enhanced effectiveness is observed where the surface acid sites of small crystal zeolites are reacted with a chemisorbed organic base.

Catalysts of low surface activity can be obtained by using medium pore zeolites of small crystal size that have been deactivated by bulky amines. These compounds all must have a minimum cross section diameter of 5 A or greater. Examples of suitable amines include monoamines, diamines, triamines, aliphatic and aromatic cyclic amines and heterocyclic amines, porphines, phthalocyanines, 1,10-phenanthroline, 4,7-diphenyl-1, 10-phenanthroline, 3,4,7,8-tetramethyl-1, 10-phenanthroline, 5,6-benzoquinoline, 2,2':6',2''-terpyridine, 2,4,6-tri(2-pyridyl)-S-triazine and 2,3-cyclododecenopyridine.

Preferred amines include substituted quinolines, heterocyclic amines and alkyl-substituted pyridines such as 2,4 or 2,6-di-alkyl pyridines, especially bulky, sterically-hindered di-ortho-alkyl pyridines, such as 2,6-di-tertiary-butylpyridine.

The lower molecular weight $C_6$—$C_{20}$ intermediate materials formed over the modified catalyst are relatively linear olefins. These olefins can be effectively converted to lube range materials by additional polymerization. Accordingly, lube range materials can be obtained in accordance with the present invention in a two-stage process. Generally the first stage involves oligomerization of an inexpensive lower olefin of, e.g., propylene at about 200°C over a surface poisoned HZSM—5. The second stage involves further oligomerization/interpolymerization of the product (or a fraction of the product) from the first stage over a second and/or different acid catalyst, which may be modified or unmodified as disclosed herein, at 100—260°C. The temperature of the second stage is usually lower than that of the first stage, i.e., 25—75°C lower and preferably the catalyst is an unmodified ZSM—5 type catalyst. Both high yields and high VI are achieved by this two-stage process.

Conventional temperatures, pressures and equipment may be used in the novel process disclosed herein. Preferred temperatures may vary from 100 to 350°C, preferably 150° to 250°C pressures from about atmospheric to 20,000 kPa and WHSV from 0.01 to 2.0, preferably 0.2 to 1.0 are employed.

The attached drawing shows the process relationships of the multi-stage process, depicting the conversion of a $C_3$—$C_6$ rich olefinic, inter-stage phase separation and recycle. Heavy hydrocarbons are recovered by fractionation and may be sent to a conventional hydrotreating unit for product finishing.

The olefinic feedstock supply 1 is brought to process pressure by means of pump 5. The primary stage I is operated continuously in a series of fixed bed downflow reactors by adding a sterically-hindered nitrogenous base to lower olefin feed at a rate sufficient to maintain surface inactivity in the catalyst. Preferably, 2,6-di-(t-butyl)-pyridine is injected into the feed at a concentration of 5 to 1000 ppm by pump 10. The mixture is a hydrocarbon solution of preheated by passing sequentially through a series of heat exchange means 12 and reactant effluent exchangers 14C, 14B, 14A and furnace 16 prior to entering the primary stage catalytic reactor system 20. A typical distillate mode first stage reactor system 20 is shown. A multi-reactor system is employed with inter-zone cooling, whereby the reaction exotherm can be carefully controlled to prevent excessive temperature above the normal moderate range of 200° to 290°C, especially in the final reaction zone. While process pressure may be maintained over a wide range, usually from 2000 to over 20,000 kPa, the preferred pressure is 7000 to 15,000 kPa. The feedstock is heated to reaction temperature and carried sequentially through a series of zeolite beds 20A, B, C wherein at least a portion of the olefin content is converted to heavier distillate constituents. Advantageously, the maximum temperature differential across only one reactor is about 30°C and the space velocity (WHSV based on olefin feed) is 0.1 to 2. The heat exchangers 14A and 14B provide inter-reactor cooling.

In a typical continuous process run under steady state conditions using HZSM—5 catalyst, the average reactor temperature in the series of adiabatic fixed bed reactors is maintained below about 260°C. In order to optimize formation of high molecular weight $C_{10}^+$ hydrocarbons, effluent temperature from the terminal reactor 20C is kept substantially below about 290°C.

The effluent mixture from stage I enters a high temperature separator (HTS) 26, wherein high boiling product is recovered as a liquid rich in $C_{10}^+$ hydrocarbons; while vaporizing volatile components of the effluent stream, including light gas and lower hydrocarbons, such as $C_1$ to $C_9$ aliphatics. Preferably, the major portion (e.g. 50% to more than 90 wt%) of $C_{10}^+$ hydrocarbon components are contained in the high boiling liquid fraction. Overhead vapor is withdrawn through conduit 27, cooled indirectly by incoming feedstock in exchanger 12 to condense a major amount of $C_5$—$C_9$ gasoline range hydrocarbons for recovery in the second low temperature phase separation unit (LTS) 30. This condensed stream is withdrawn through conduit 32 to provide essentially all of the liquid olefinic recycle stream and pressurized by pump means 34 prior to combining with feedstock. Advantageously, the major portion of $C_5$ to $C_9$ hydrocarbon components are contained in this liquified recycle stream; however, an optional recycle stream 36 may be obtained from distilled raw gasoline. By controlling the moderate reaction temperature, especially in the last bed, undesired cracking of the product $C_{10}^+$ hydrocarbons is minimized. Advantageously, both stages contain HZSM—5 catalyst and are operated continuously and/or batchwise. By contacting the primary stage heavy effluent fraction with an acid exchange resin or other adsorbent in neutralizer unit 40 between stages any residual nitrogeneous base is removed.

The second stage usually is maintained at an average temperature less than about 260°C at elevated pressure greater than about 2000 kPa and weight hourly space velocity less than 1 $hr^{-1}$. An olefinic intermediate stream from units 26, 40 is pressurized by pump 42, and heated by effluent heat exchanger 42 and furnace 44 prior to entering the Stage II reactor 50 for further oligomerization conversion to produce

lubricant, raw olefinic gasoline, distillate, the Stage II effluent may be cooled in exchanger 42 or by-passed via line 54 and furnace 56 prior to flashing in phase separator 60. Overhead containing gasoline $C_4$ light gas and light distillate may be recovered as product and/or recycled via line 64 to the reactor stage(s).

Advantageously, the secondary effluent liquid stream is fractionated to provide a major raw product stream consisting essentially of 290°C$^+$ aliphatic hydrocarbons comprising a major amount of $C_{10}$—$C_{20}$ distillate and $C_{20}$—$C_{60}$ aliphatic hydrocarbons. This raw olefinic product may then be hydrotreated in a separate process step (not shown) to provide a paraffinic lubricant and/or heavy distillate product. Details of a mild hydrogenation treatment may be obtained from U.S. Patent 4,211,640, typically using Co or Ni with W/Mo and/or noble metals. The hydrotreated stream may be further fractionated to yield refined high frade lubricants of outstanding quality.

The following Examples illustrate the invention.

Example A

Stage I Processing

Primary stage catalyst (HZSM—5) is pretreated by mixing the catalyst particles with a 10 wt% solution of 2,6-(t-butyl)-pyridine deactivating agent in hexane, solvent washing and drying to obtain a surface-deactivated material. An olefinic feedstock consisting of 27 weight percent propene, 36.1 wt% butene, 10.7 wt% propane and 26.1 wt% butane is cofed with gasoline recycle in a downflow fixed bed reactor system, as depicted, at 7000 kPa about 0.4 WHSV and average reactor temperature of 205°C. The deactivating agent is injected with the olefinic feed at a concentration of about 50 weight parts per million, based on fresh feed. The results of the continuous run are shown below.

Table I

Primary Stage Production of Intermediate Hydrocarbon

| | | |
|---|---|---|
| Hours on Stream | 42-54 | 114-126 |
| Olefin Conv., wt % | 98% | 98% |
| Yield, wt. % | | |
| LPG | 4 | 3 |
| Gasoline $C_5$-165°C | 31 | 35 |
| Distillate (165-345°C) | 58 | 57 |
| Lubricant range 345°C+ | 7 | 5 |
| | 100% | 100% |
| Lube Properties | | |
| Viscosity @38°C, cs | 14.68 | 11.97 |
| Viscosity @100°C, cs | 3.60 | 3.13 |
| V.I. | 131 | 126 |

Stage II Processing

The secondary reactor is charged with unmodified HZSM—5 catalyst having an acid cracking activity (α-value) of about 250. An enclosed stirred reactor is maintained at an average temperature of 175°C under autogenous pressure. The secondary feed is the 165—345°C distillate cut from the primary effluent (Table I), which is contacted with catalyst at a 10:1 ratio based on active catalysts at a space velocity of about 0.1 to 0.4 WHSV. The results of this run are tabulated below:

Table II

| | | |
|---|---|---|
| Hours on Stream | 32-54 | 114-126 |
| Yield 345°C$^+$ Lube | 31.5 | 30.6 |
| Lube Properties | | |
| Viscosity, cs @40°C | 22.49 | 21.75 |
| Viscosity, cs @100°C | 4.50 | 4.48 |
| V.I. | 113 | 119 |

Example B

Stage I

Ten parts by weight of 2,6-di-tert-butylpyridine modified small crystal (0.1 microns) HZSM—5 as prepared in Example A and 100 parts propylene are heated to 200°C in an autoclave under inert atmosphere with stirring. After 15 hours, the pressure decreases from 1240 to 33 psi, 100 parts propylene are charged and the temperature is adjusted to 200°C. After 29.5 more hours, the pressure decreases from 1150 to 260 psi, 100 parts propylene are again charged and the temperature adjusted to 200°C. After 66.3 hours from the second propylene addition, the reaction is stopped. An oil product, 167.8 gm, was obtained which contained only 2.8% 345°C$^+$ lube fraction.

Stage II

162 parts by weight of the product from Stage I and 15 parts of unmodified small crystal HZSM—5 zeolite are charged to an autoclave. After flushing the contents with nitrogen, the mixture is heated carefully to 100°C, and maintained 4 days (96 hours). No significant change in the oil takes places as indicated by GC results of samples withdrawn from the reaction mixture. The temperature is raised to 150°C. After 69 hours at 150°C, the 345°C$^+$ lube yield is determined to be 11.2%; after 92.7 hours, 16.7%: after 116.7 hours, 19.3%; after 140.8 hours, 23%; after 164.7 hours, 26.4%; after 236.7 hours, 31%. The reaction is stopped at this point and 138 gm product were recovered. After distillation, the 345°C$^+$ lube has kinematic viscosities of 31.1 cs at 40°C, 56 cs at 100°C and a VI of 120. The pour point is −29°C.

Example C

Stage I

Oligomers are prepared as described in Example B and fractionated. The fraction containing $C_9$=—$C_{18}$= is used in the second stage to yield lube.

Stage II

One hundred parts of the $C_9$=—$C_{18}$= fraction from the first stage are cooled to 0—5°C in a stirred reactor under dry nitrogen atmosphere. The oligomer mixture is saturated with $BF_3$. To this $BF_3$-olefin mixture is added 10 ml of $BF_3C_4H_9OH$ complex, keeping the temperature of the reaction mixture between 0—5°C. Samples are withdrawn periodically and their product compositions determined by gas chromatography. The results are tabulated below:

| Total Time Hours | % Conversion to Lube 345°C+ | 400°C+ |
|---|---|---|
| 0 | 0 | 0 |
| 0.5 | 20.6 | 12.1 |
| 1.0 | 28.0 | 17.5 |
| 2.0 | 32.5 | 20.9 |
| 3.0 | 35.8 | 23.6 |
| 4.0 | 36.9 | 24.4 |
| 5.0 | 39.2 | 26.3 |

After 5 hours, the reaction mixture is neutralized with ammonia to form a white solid which is filtered off. The lube is obtained by distillation. The 345°C$^+$ lube has kinematic viscosities of 32.82 cs at 40°C, 5.00 cs at 100°C and a VI of 63.

Example D

Stage I

Follows the procedure of Example C above.

Stage II

The procedure of Example C is followed, except that the reaction is carried out for 0.5 hours. the 345°C$^+$ lube (~12%) has kinematic viscosities of 12.6 at 40°C, 3.2 cs at 100°C and a VI of 127.

Examples C and D illustrate that lubes of high viscosities and of high viscosity index can be obtained when adequate reaction conditions are employed, such as by varying the total reaction time.

**Claims**

1. A two-stage process for producing hydrocarbons by oligomerizing lower olefin feed at elevated temperature and pressure which comprises

contacting the lower olefin in a primary reactor stage under oligomerization conditions with a medium pore shape-selective zeolite catalyst having acid cracking activity, and a constraint index of 1 to 12; wherein said zeolite has internal acidic pore activity; and

contacting at least a portion of the primary stage effluent in a secondary reactor stage with an acid catalyst to produce a high viscosity index lubricant range hydrocarbon characterized in that the zeolite surface acidity of the catalyst of the primary stage is neutralized by a sterically-hindered amine having an effective cross section larger than 5 Angstroms.

2. A process according to claim 1 wherein the zeolite consists essentially of aluminosilicate HZSM—5 having a silica to alumina molar ratio at least 12.

3. A process according to any preceding claim wherein the bulky amine is 2,6-di(t-butyl)-pyridine which is injected at concentration of at least 5 ppm into a continuous feed stream comprising $C_3^+$ mono-olefins.

4. A process according to any preceding claim including the step of separating the primary stage effluent to obtain a heavy fraction rich in substantially linear $C_{10}^+$ olefins; and

wherein a light fraction is recovered from the primary stage effluent for recycle and conversion with the lower olefin feed.

5. A process according to any preceding claim wherein the primary stage is operated continuously in a series of fixed bed downflow reactors by adding a sterically-hindered nitrogenous base as the basic compound to lower olefin feed at a rate sufficient to maintain surface inactivity in the catalyst.

6. A process according to any preceding claim wherein the sterically-hindered nitrogenous base is 2,6-di(t-butyl)-pyridine is injected into the feed at a concentration of 5 to 1000 ppm, and wherein the secondary stage acid catalyst comprises $BF_3$.

7. A process according to any preceding claim wherein the catalyst of the primary stage is pretreated with a surface-deactivating amount of the basic compound and is essentially free of carbonaceous deposits.

8. A process according to any preceding claim wherein both stages contain HZSM—5 catalyst and are operated continusously; and further comprising the steps of: contacting the primary stage heavy effluent fraction with an adsorbent between stages to remove any residual nitrogenous base; and maintaining the secondary stage at an average temperature less than about 260°C at elevated pressure greater than about 2000 kPa and weight hourly space velocity less than 1 hour$^{-1}$.

9. A process according to any preceding claim wherein the olefinic feed comprises $C_2$—$C_8$ olefins; the catalyst comprises aluminosilicate having a silica-to-alumina mole ratio of at least 12 and a constraint index of 1 to 12 prior to deactivation treatment; and the organic base comprises a di-(ortho-alkyl) substituted pyridine.

10. A process according to claim 9 wherein the olefinic feed comprises $C_3$—$C_4$ aliphatics; the catalyst comprises a fixed bed of HZSM—5 particles having an acid cracking value prior to deactivation treatment of 5 to 300, and the process is conducted at a temperature of 150°C to 290°C, a pressure of at least 1500 kPa and weight hourly space velocity of about 0.1 to 2 hr$^{-1}$.

11. A process according to any one of claims 9 to 10 comprising the further steps of fractionating the process effluent to recover a $C_{10}^+$ heavy fraction; contacting the heavy fraction with an acid to neutralize residual base; and

further oligomerizing the heavy fraction in contact with an acidic catalyst to produce a high viscosity index lubricant quality oil.

12. A process of claim 11 wherein the acid catalyst comprises an aluminosilicate zeolite.

13. A process of claim 12 wherein the acid catalyst consists essentially HZSM—5.

14. A two-stage system for producing hydrocarbons by oligomerizing lower olefin feed at elevated temperature and pressure comprising, in combination:

a primary reactor stage having means (20) for contacting the lower olefin under oligomerization conditions with a medium pore shape-selective siliceous zeolite catalyst having acid cracking activity, wherein said zeolite has internal acidic pore activity and wherein the zeolite surface is substantially inactive for acidic reations; means (26) for separating the primary stage effluent to obtain a heavy fraction rich in substantially linear $C_{10}^+$ olefins; and

a secondary reactor stage having means (50) for contacting the heavy fraction with an acid catalyst to upgrade the heavy fractions to a high viscosity index lubricant range hydrocarbon.

15. A system according to claim 14 further comprising means for injecting (10) a catalyst surface inactivating agent with the olefin feed into the primary reactor stage.

16. A system according to claim 17 comprising interstage contact means (40) for removing residual inactivating agent from the heavy fraction prior to contacting a secondary stage catalyst comprising an acid zeolite.

**Patentansprüche**

1. Zweistufen-Verfahren zur Herstellung von Kohlenwasserstoffen durch Oligomerisierung einer niederen Olefinzufuhr bei erhöhter Temperatur und erhöhtem Druck, welches umfaßt

Kontakt des niederen Olefins in einer primären Reaktorstufe bei Oligomerisierungsbedingungen mit einem formselektiven Zeolithkatalysator mit mittleren Poren und Säurecrackaktivität und einem Zwangsindex von 1 bis 12, wobei dieser Zeolith eine innere saure Porenaktivität aufweist, und

Kontakt von zumindest einem Teil des Abflusses der primären Stufe in einer sekundären Reaktorstufe mit einem sauren Katalysator, um einen Kohlenwasserstoff im Schmierölbereich mit hohem viskositätsindex herzustellen, dadurch gekennzeichnet, daß die Oberflächenacidität des Zeolithkatalysators der primären Stufe durch ein sterischgehindertes Amin mit einem wirksamen Querschnitt von mehr als 5 Angström neutralisiert wird.

2. Verfahren nach Anspruch 1 worin der Zeolith im wesentlichen aus Aluminosilicat HZSM—5 mit einem Siliciumdioxid/Aluminiumoxid-Molverhältnis von mindestens 12 besteht.

3. Verfahren nach einem der vorstehenden Ansprüche worin das voluminöse Amin 2,6-Di(t-butyl)pyridin ist, das mit einer Konzentration von mindestens 5 ppm in den kontinuierlichen Zufuhrstrom eingespritzt wird, der $C_3^+$-Monoolefine umfaßt.

4. Verfahren nach einem der vorstehenden Ansprüche, welches den Schritt der Abtrennung des Abflusses der primären Stufe umfaßt, um eine schwere Fraktion zu erhalten, die reich an im wesentlichen linearen $C_{10}^+$-Olefinen ist, und

worin die leichte Fraktion aus dem Abfluß der primären Stufe zur Rezirkulierung und Umwandlung mit der niederen Olefinzufuhr gewonnen wird.

5. Verfahren nach einem der vorstehenden Ansprüche, worin die primäre Stufe kontinuierlich in einer Reihe von Festbett-Rückstromreaktoren betrieben wird, indem die sterisch-gehinderte stickstoffhaltige Base der niederen Olefinzufuhr als basische Komponente in einer Menge zugegeben wird, die ausreichend ist, um die Inaktivität der Oberfläche in diesem Katalysator aufrechtzuerhalten.

6. Verfahren nach einem der vorstehenden Ansprüche worin die sterisch-gehinderte stickstoffhaltige Base 2,6-Di(t-butyl)pyridin ist, die mit einer Konzentration von 5—1000 ppm in die Zufuhr eingespritzt wird, und worin der saure Katalysator der sekundären Stufe $BF_3$ umfaßt.

7. Verfahren nach einem der vorstehenden Ansprüche, worin der Katalysator der primären Stufe mit einer die Oberfläche deaktivierenden Menge einer basischen Komponente vorbehandelt wird und im wesentlichen frei von kohlenstoffhaltigen Ablagerungen ist.

8. Verfahren nach einem der vorstehenden Ansprüche, worin beide Stufen den Katalysator HZSM—5 enthalten und kontinuierlich betrieben werden, das weiterhin die Schritte umfaßt: Kontakt der schweren Abflußfraktion der primären Stufe mit einem Adsorbtionsmittel zwischen den Stufen, um die restliche stickstoffhaltige Base zu entfernen, und Halten der sekundären Stufe bei einer Durchschnittstemperatur von weniger als etwa 260°C bei erhöhtem Druck von mehr als etwa 2000 kPa und einer stündlichen Gewichts-Raum-Geschwindigkeit von weniger als 1 $h^{-1}$.

9. Verfahren nach einem der vorstehenden Ansprüche, worin die olifinische Zufuhr $C_2$—$C_8$-Olifine umfaßt, der Katalysator ein Aluminosilicat mit einem Siliciumdioxid/Aluminiumoxid-Molverhältnis von mindestens 12 und einem Zwangsindex von 1 bis 12 vor der Deaktivierungsbehandlung umfaßt und die organische Base ein Di(ortho-alkyl)-substituiertes Pyridin umfaßt.

10. Verfahren Anspruch 9, worin die olifinische Zufuhr $C_3$—$C_4$-Aliphaten umfaßt, der Katalysator ein Festbett von HZSM—5-Partikeln mit einem Säurecrackwert vor der Deaktivierungsbehandlung von 50—300 umfaßt, und das Verfahren bei einer Temperatur von 150—290°C, einem Druck von mindestens 1500 kPa und einer stündlichen Gewichts-Raum-Geschwindigkeit von etwa 0,1 bis 2 $h^{-1}$ durchgeführt wird.

11. Verfahren nach einem der Ansprüche 9—10, das weiterhin die Schritte der Fraktionierung des Abflusses des Vefahrens, um die schwere $C_{10}^+$-Fraktion zu gewinnen, des Kontaktes dieser schweren Fraktion mit einer Säure, um die restliche Base zu neutralisieren, und der weiteren Oligomerisierung der schweren Fraktion im Kontakt mit einem sauren Katalysator umfaßt, um ein Qualitätsschmieröl mit hohem Viskositätsindex herzustellen.

12. Verfahren nach Anspruch 11, worin der saure Katalysator einen Aluminosilikat-Zeolith umfaßt.

13. Verfahren nach Anspruch 12, worin der saure Katalysator im wesentlichen aus HZSM—5 besteht.

14. Zweistufen-System zur Herstellung von Kohlenwasserstoffen durch Oligomerisierung einer niederen Olefinzufuhr bei erhöhter Temperatur und erhöhtem Druck, welches in Kombination umfaßt:

eine primäre Reaktorstufe mit einer Einrichtung (20) zum Kontakt des niederen Olefins unter Oligomerisierungsbedingungen mit einem formselektiven siliciumhaltigen Zeolithkatalysator mit mittleren

Poren und einer Säurecrackaktivität, wobei dieser Zeolith eine innere saure Porenaktivität aufweißt und worin die Oberfläche des Zeoliths für saure Reaktionen im wesentlichen inaktiv ist; eine Einrichtung (26) zur Trennung des Abflusses der primären Stufe, um eine schwere Fraktion zu erhalten, die reich an im wesentlichen linearen $C_{10}^+$-Olefinen ist, und

eine sekundäre Reaktorstufe mit einer Einrichtung (50) zum Kontakt der schweren Fraktion mit einem sauren Katalysator, um die Qualität der schweren Fraktion zu einem Kohlenwasserstoff im Schmierölbereich mit hohem Viskositätsindex zu verbessern.

15. System nach Anspruch 14, welches weiterhin eine Einrichtung zum Einspritzen (10) eines Inaktivierungsmittels für die Katalysatoroberfläche zusammen mit der Olefinzufuhr in die primäre Reaktorstufe umfaßt.

16. System nach Anspruch 17, daß eine Zwischenstufen-Kontakteinrichtung (40) umfaßt, um das restliche Inaktivierungsmittel vor dem Kontakt des Katalysators der sekundären Stufe, der einen sauren Zeolith umfaßt, von der schweren Fraktion zu entfernen.

**Revendications**

1. Un procédé en deux étapes pour produire des hydrocarbures par oligomérisation d'une charge d'oléfines inférieures à température et pression élevées, qui comprend

la mise en contact de l'oléfine inférieure dans un premier étage de réacteur dans des conditions d'oligomérisation avec un catalyseur de type zéolite sélectif de forme à pores moyens ayant une activité de craquage acide et un indice de contrainte d'environ 1 à 12; dans lequel la zéolite a une activité de pore acide interne; et

la mise en contact d'au moins une partie de l'effluent provenant de la première étape dans un second étage de réacteur avec un catalyseur acide pour produire un hydrocarbure lubrifiant d'indice de viscosité élevé, caractérisé en ce que l'acidité de surface de la zéolite du catalyseur de la première étape est neutralisée par une amine encombrée stériquement ayant une section droite efficace supérieure à 5Å.

2. Un procédé suivant la revendication 1, caractérisé en ce que la zéolite consiste essentiellement en aluminosilicate HZSM—5 ayant un rapport molaire silice à alumine d'au moins 12.

3. Un procédé suivant l'une quelconque des revendications précédentes, caractérisé en ce que l'amine volumineuse est la 2,6-di-t-butyl pyridine, qui est injectée à une concentration d'au moins 5 ppm dans un courant d'alimentation continu comprenant des mono-oléfines en $C_3^+$.

4. Un procédé suivant l'une quelconque des revendications précédentes, caractérisé en ce qu'il comprend l'étape de séparation de l'effluent de la première étape pour obtenir une fraction lourde riche en oléfines en $C_{10}^+$ sensiblement linéaires; et

qu'une fraction légère est récupérée à partir de l'effluent de la première pour être recyclée et convertie avec la charge d'oléfines inférieures.

5. Un procédé suivant l'une quelconque des revendications précédentes, caractérisé en ce que la première étape est réalisée en continu dans une série de réacteurs à flux descendant à lit fixe, par addition d'une base azotée encombrée stériquement en tant que composé basique à la charge d'oléfines inférieures avec un débit suffisant pour maintenir une inactivité de surface dans le catalyseur.

6. Un procédé suivant l'une quelconque des revendications précédentes, caractérisé en ce que la base azotée encombrée stériquement est la 2,6-di-t-butyl pyridine, qu'elle est injectée dans la charge d'alimentation à une concentration de 5 à 1000 ppm et que le catalyseur acide de la seconde étape comprend du $BF_3$.

7. Un procédé suivant l'une quelconque des revendications précédentes, caractérisé en ce que le catalyseur de la première étape est prétraité avec une quantité désactivant la surface du composé basique et est essentiellement dépourvu de dépôts carbonés.

8. Un procédé suivant l'une quelconque des revendications précédentes, caractérisé en ce que les deux étapes contiennent un catalyseur de type HZSM—5 et fonctionnent en continu; et qu'il comprend de plus les étapes de: mise en contact de la fraction d'effluent lourd provenant de la première étape avec un adsorbant entre des étapes pour éliminer toute base azotée résiduelle, et le maintien de la seconde étape à une température moyenne inférieure à environ 260°C, à une pression élevée supérieure à environ 2000 kPa et à une vitesse spatiale horaire pondérale inférieure à 1 $h^{-1}$.

9. Un procédé suivant l'une quelconque des revendications précédentes, caractérisé en ce que la charge oléfinique comprend des oléfines en $C_2$—$C_8$, que le catalyseur comprend un aluminosilicate ayant un rapport molaire silice/alumine d'au moins 12 et un indice de contrainte de 1 à 12 avant traitement de désactivation, et que la base organique comprend une pyridine di-(ortho-alkyl)-substituée.

10. Un procédé suivant la revendication 9, caractérisé en ce que la charge oléfinique comprend des aliphatiques en $C_3$—$C_4$, que le catalyseur comprend un lit fixe de particules de HZSM—5 ayant une valeur de craquage acide de 50 à 300 avant traitement de désactivation, et que le procédé est conduit à une température de 150 à 290°C, à une pression d'au moins 1500 kPa et avec une vitesse spatiale horaire pondérale d'environ 0,1 à 2 $h^{-1}$.

11. Un procédé suivant l'une quelconque des revendications 9 à 10, caractérisé en ce qu'il comprend les étapes supplémentaires de fractionnement de l'effluent du procédé pour obtenir une fraction lourde en $C_{10}^+$, de mise en contact de la fraction lourde avec un acide pour neutraliser la base résiduelle; et

d'oligomérisation supplémentaire de la fraction lourde en contact avec un catalyseur acide pour produire une huile de qualité lubrifiante d'indice de viscosité élevé.

12. Un procédé suivant la revendication 11, caractérisé en ce que le catalyseur acide comprend une zéolite de type aluminosilicate.

13. Un procédé suivant la revendication 12, caractérisé en ce que le catalyseur acide consiste essentiellement en HZSM—5.

14. Un système à deux étages pour la production d'hydrocarbures par oligomérisation d'une charge d'olefines inférieures à température et pression élevées, comprenant, en combinaison;

un premier étage de réacteur ayant des moyens (20) pour mettre en contact l'oléfine inférieure dans des conditions d'oligomérisation avec un catalyseur de type zéolite siliceuse sélective de forme à pores moyens ayant une activité de craquage acide, dans lequel cette zéolite a une activité de pore acide interne et où la surface de la zéolite est pratiquement inactive pour des réactions acides; des moyens (26) pour séparer l'effluent de la première étape pour obtenir une fraction lourde riche en oléfines en $C_{10}^+$ sensiblement linéaires; et

un second étage de réacteur ayant des moyens (50) pour mettre en contact la fraction lourde avec un catalyseur acide afin de valoriser la fraction lourde en un hydrocarbure lubrifiant à haut indice de viscosité.

15. Un système suivant la revendication 14, caractérisé en ce qu'il comprend de plus des moyens pour injecter (10) un agent inactivant la surface du catalyseur avec la charge oléfinique dans le premier étage de réacteur.

16. Un système suivant la revendication 15, caractérisé en ce qu'il comprend des moyens de contact entre les étapes (40) pour éliminer l'agent désactivant résiduel de la fraction lourde avant contact avec un catalyseur de la seconde étape comprenant une zéolite acide.

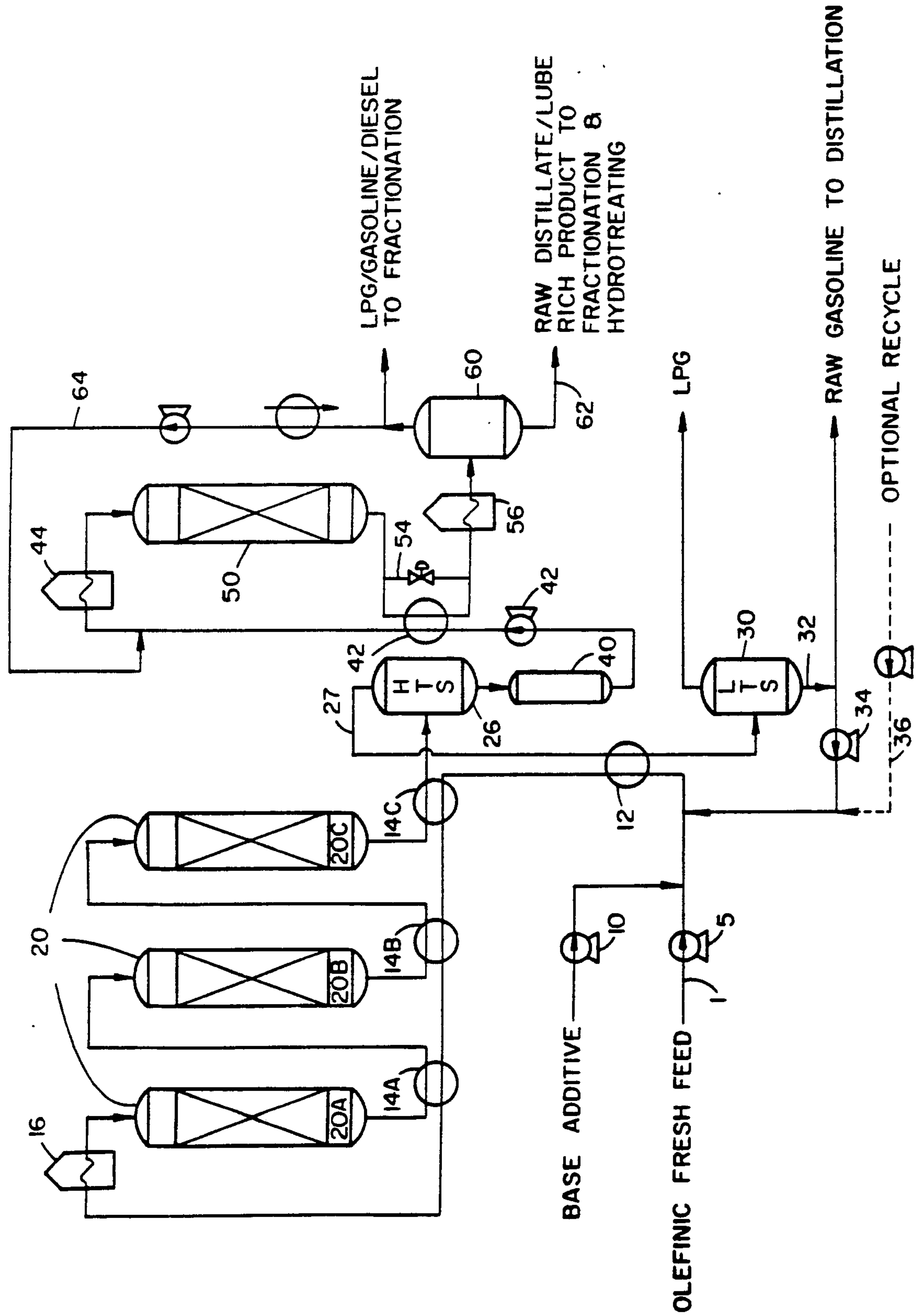
LPG/GASOLINE/DIESEL TO FRACTIONATION
RAW DISTILLATE/LUBE RICH PRODUCT TO FRACTIONATION & HYDROTREATING
LPG
RAW GASOLINE TO DISTILLATION
OPTIONAL RECYCLE
BASE ADDITIVE
OLEFINIC FRESH FEED
HTS
LTS
20A
20B
20C
14A
14B
14C
16
20
12
27
26
42
40
44
50
54
56
60
62
64
30
32
34
36
10
5
1